# EUROPEAN PATENT APPLICATION

(11) **EP 1 847 566 A1**
(43) Date of publication of application: **24.10.2007**
(21) Application number: 06380087.4
(22) Date of filing: 18.04.2006
(51) Int. Cl.: C08L 25/04

(54) **Polymer blends comprising polystyrene and other thermoplastics**

(71) Applicant: Topox-Foam, S. L., 43001 Tarragona Tarragona (ES)
(72) Inventor: Huertas Paredes, Inmaculada, 43001 Tarragona (ES); Ladera Sainz, Jesús, 43001 Tarragona (ES)
(74) Representative: ABG Patentes, S.L.

(57) **Abstract**

The present invention relates to a blend comprising a thermoplastic which is a polystyrene resin and other thermoplastics. More specifically, it relates to a blend comprising at least 70% by weight of a polystyrene resin and from 0.5% to 30% by weight of a different thermoplastic, to a blend for the elaboration of a foam, a method for producing it and its use as a thermal insulator in building, construction, refrigeration, automotive and buoyancy applications.

## Description

### FIELD OF INVENTION

The' present invention relates to a blend comprising a thermoplastic which is a polystyrene resin and other thermoplastics. More specifically, it relates to a blend for the elaboration of a foam, a method for producing it and its use as a thermal insulator in building, construction, refrigeration, automotive and buoyancy applications.

### BACKGROUND OF THE INVENTION

Foamed products obtained from thermoplastics such as polystyrene, polyethylene and polypropylene are widely used as heat and acoustic insulting materials in the building field as well as in the packaging of food, electronic and decorating products. The use in these applications is due to their lightweight, good heat and acoustical properties, and cushioning property against outside stress.

Although many of the foamed products are constituted exclusively by a unique type of thermoplastic polymer, there exist prior art documents describing thermoplastic blends.

American patent document US4,847,150 discloses a foamed article of mixed resins comprising polyolefin and polystyrene by using a special hydrogenated block copolymer of styrene and butadiene, in which an amount of 1,2-binding butadiene and styrene are specified. However, according to this method a foamed article having only a few mm is obtained.

European patent EP 1054033 describes a foamed extrusion article constituted by a mixture of polypropylene and polystyrene, being the polypropylene in a higher proportion (50-95%) with respect to polystyrene. However, according to the shown examples, the foamed articles have a percentage of closed cells comprised between 40 and 65%, and this mixture only provides foamed extrusion articles with a thickness of approximately 25 mm. In addition, the best properties are only reached when the polypropylene are modified with other monomers such as isoprene, styrene and butadiene, which endears and delays the production of foamed products.

The Japanese document JP11012382 refers to polystyrene foams wherein 10 µm diameter polypropylene particles are distributed in its structure, with the aim of improving thermal resistance and oilproof in containers destined to package food products.

Finally, international application WO02/072691 discloses blends of ethylenic polymers with improved modulus and melt strength and articles fabricated from these blends for different applications. Optionally, another thermoplastic such as polystyrene is included in the mixture in a minority proportion. However, the blends present low density and stress, leading to cell breaking and therefore reducing considerably the percentage of closed cells.

The blends described in the mentioned documents have also the disadvantage of a reduced miscibility/compatibility due to their different melting points, leading to the production of non-melted and non-foamed particles in the final product which produce scratch and leaks that diminishes the dimensional stability as well as the surface quality.

Additionally, none of the documents mentions blends of thermoplastics polymers which enable to obtain foamed products with similar properties to those of polystyrene foams as heat insulator and cushioning properties, so widely used in a large number of applications.

On the other hand, due to the widely use of polystyrene as well as polyethylene and polypropylene, in foamed or unfoamed form, enormous quantities of waste thermoplastics are generated which have short lifetimes and also present a formidable waste disposable problem. The industry is constantly on the lookout for better disposal means for these waste products as alternatives to merely transporting them to a landfill for either incineration or burial.

In that sense, there are some documents describing the use of recycled polystyrene coming from these wastes and its use in different applications. For example, European application EP 0732357 discloses the production of flame retardant foamed polystyrene constituted by a mixture of virgin and recycled foamed polystyrene, and its application as thermal insulator in the construction and building field. The virgin polystyrene may be copolymerized with other vinylic monomers.

American patent US 5,330,596 refers to the recycling of foam polystyrene trays with barrier films, mixed with virgin polystyrene in the elaboration of foams destined to produce barrier foam trays.

However, there still exists a real need for recycling this type of polymers and for finding a use in different applications.

In the light of state of the art, it should be desirable to find blends which allow obtaining foamed products with properties similar to those of polystyrene foams, such as high closed cells percentage, low density and large thickness, obtainable by a general process which avoids the problems related to miscibility and modification of polymers, permits to reduce costs and having the profitable possibility of making use of recycled polymers.

### BRIEF DESCRIPTION OF THE INVENTION

The present invention permits to solve the drawbacks raised by the state of the art and, furthermore, it stands for a way of finding a use for recycled plastics, providing blends comprising a thermoplastic which is a polystyrene resin and a proportion of other thermoplastic, both coming from conventional plastics as well as from plastics produced in recycling plants, for the elaboration of foamed materials aimed to several applications. The foams obtained from these blends have properties comparable to foams made only by extruded polystyrene or by mixtures of polystyrene and recycled polystyrene, such as low density, a high closed cells percentage, good compression strength, dimensional stability and good surface quality which make them suitable as thermal insulators.

Thus, an object of the present invention relates to a blend comprising at least 70% by weight of a thermoplastic which is a polystyrene resin and from 0.5% to 30% by weight of a different thermoplastic.

A second object of this invention refers to a process for the elaboration of a blend as described above.

In a third object, the present invention relates to a foam obtainable from a blend as defined above.

Another object of the invention refers to a process for the elaboration of a foam as described above.

Another object of the invention relates to a foamed extrusion board obtainable from a foam, such as described above.

Finally, the invention refers to the use of a blend for the elaboration of the foam, the use of the foam for the preparation of a foamed extrusion board as well as the use of the foam and the foamed extrusion board as thermal insulators in building, construction, refrigeration, automotive and buoyancy applications.

### DETAILED DESCRIPTION OF THE INVENTION

One object of the present invention relates to a blend which comprises:
- at least 70% by weight of a thermoplastic which is a polystyrene resin; and
- from 0.5% to 30% by weight of a different thermoplastic.

In the context of the present invention it is understood by "different thermoplastic" a thermoplastic or a mixture of thermoplastics, all of them being different from polystyrene resin.

In a preferred embodiment of the invention, the proportion of the different thermoplastic in the blend is comprised between 2% and 20% by weight, more preferably between 5% and 15% by weight.

In a particular embodiment of the invention, either the polystyrene resin or the different thermoplastic are virgins and/or recycled polymers.

The polystyrene resin is the main component of the blend, being in a proportion of at least 70% by weight in the blend. Said polystyrene resin may come from a conventional virgin polystyrene resin, from a recycled polystyrene resin or may be a mixture of virgin polystyrene resin and recycled polystyrene resin.

In a particular embodiment, the proportion of recycled polystyrene resin in a mixture of virgin polystyrene resin and recycled polystyrene resin is comprised between 2% and 75% by weight with respect to the total weight of the polystyrene resin in the blend, more preferably between 5 and 50% by weight and even more preferably between 5 and 20% by weight.

As virgin polystyrene resin any conventional styrenic resin can be used, such as homopolymers of styrene, methyl styrene, ethyl styrene, isopropyl styrene, dimethyl styrene, chlorostyrene, bromostyrene, vinyltoluene, copolymers of styrene and alpha-methyl styrene, acrylonitrile, butadiene or methyl methacrylate, or mixtures thereof.

The melt index of the polystyrene resin is preferably comprised between 0.5 and 30 g/10 min, more preferably between 2 and 20 g/10 min, even more preferably between 2 and 10 g/10 min.

As recycled polystyrene resin any conventional type of waste polystyrene collected from rubbish dumps or from other waste sources can be used. Sources of recycled polystyrene include polystyrene cups and containers, rigid styrene tableware, clothing hangers, and other containers. The recycled polystyrene can be utilized in any of its commonly available forms, such as, foamed (expanded) polystyrene, crystal polystyrene and high impact polystyrene.

The different thermoplastic used in the blend of the present invention may come from a virgin thermoplastic, from a recycled thermoplastic or can be a mixture of virgin and recycled thermoplastic. In a particular embodiment, the proportion of recycled thermoplastic in a mixture of virgin thermoplastic and recycled thermoplastic is comprised between 2 and 75% by weight with respect to the total weight of the different thermoplastic in the blend, more preferably between 5 and 50% by weight and even more preferably between 5 and 20% by weight.

As virgin different thermoplastic any conventional thermoplastic, i.e., any polymer which suffers a deformation with temperature, or any mixture of thermoplastics all of them being different from polystyrene resin, can be used. However, it is preferred the use of a thermoplastic selected from polypropylene (PP), polyethylene (PE), high density polyethylene (HDPE), low density polyethylene (LDPE), linear low density polyethylene (LLDPE), polyethylene terephthalate (PET), polyvinyl chloride (PVC), copolymers of ethyelene and propylene, and mixtures thereof.

In a more preferred embodiment of the invention, the different thermoplastic is selected from homopolymers of: polypropylene (PP), polyethylene (PE), high density polyethylene (HDPE), low density polyethylene (LDPE), linear low density polyethylene (LLDPE), polyethylene terephthalate (PET), polyvinyl chloride (PVC); copolymers of ethylene and propylene; and mixtures thereof, and even more preferably the different thermoplastic is a homopolymer of ethylene or propylene.

As recycled different thermoplastic any conventional type of different waste thermoplastic collected from rubbish dumps or from other waste sources can be used. Sources of recycled thermoplastic can include beverage and packaging containers. However, the thermoplastic can also be obtained from the mixed portion of recycled stream obtained after removal of plastic beverage and packaging containers. The ability to utilize this mixed plastics or commingled plastic portion provides both economic and environmental advantages.

The blends of the present invention may optionally incorporate one or more additives. These additives include, without limitation, dyes, stability control agents, nucleating agents, inorganic fillers, plasticizers, conductive fillers, pigments, colorants, antioxidants, acid scavengers, ultraviolet absorbers or stabilizers, flame retardant agents, processing aids, anti-static agents, cling additives and antiblock additives. The additives are advantageously employed in functionally equivalent amounts known to those skilled in the art, but preferably they are incorporated in a proportion lower than 10% by weight respect to total weight of the blend.

A nucleating agent is optionally added in the manufacture of foams to control the dispersion and the size of foam cells. Preferred nucleating agents include inorganic substances such as calcium carbonate, talc, clay, titanium dioxide, silica, barium stearate, calcium stearate, diatomaceous earth, mixtures of citric acid and sodium bicarbonate.

A flame retardant agent is optionally added and it includes a halogenated compound such as hexabromocyclodedecane, or mixtures with compounds selected from the group consisting of phosphorus type flame retardants. The amount of flame retardant agent added to the blend varies between 0 and 5%.

The blends of the present invention may be prepared by any suitable means known in the art such as, for example, mixing physically the polystyrene resin, the different thermoplastic and, optionally the additives, in the desired proportions in a mixing apparatus such as a screw extruder or a Banbury mixer, at a temperature and pressure which allow the melting of the polymeric components. Said temperature is comprised between 125 and 200°C while the pressure is comprised between 40 and 200 bars. The blend may be processed into a final solid state article by, for example, extrusion or injection molding.

In a particular embodiment of the invention, the blends are prepared by granulating the polystyrene resin and the different thermoplastic components and then mixing the granulating polystyrene resin, the different thermoplastic, and optionally the additives in an extruder. The blend is there plasticized at a pressure higher than atmospheric pressure and at a temperature higher than room temperature. Specifically, the temperature and pressure profiles are kept with decreasing values of temperature (from 200 to 125°C) and pressure (from 200 to 40 bars). Afterwards, the blend is sharply decompressed and cooled at atmospheric pressure and at room temperature while it is extruded throughout a final extrusion die.

The blends of the present invention are very useful for fabricating polymer foams having properties comparable to those obtained only from polystyrene resins but with the advantage of making use of a proportion of a different thermoplastic which does not need to be modified, which permits to reduce costs, to avoid the problem of miscibility in the blend and with the profitable possibility of making use of recycled polymers.

Accordingly, another object of the invention refers to a foam obtainable from a blend as described above. So, the present invention relates to a foam which comprises a blend comprising:
- at least 70% by weight of a thermoplastic which is a polystyrene resin; and
- from 0.5% to 30% by weight of a different thermoplastic,

In a particular embodiment of the invention, either the polystyrene resin or the different thermoplastic are virgins and/or recycled polymers.

The foams of the present invention are made by a conventional extrusion foaming process such as described in GB-A-1220053, GB-A-1230992, EP0528536 or US4436679. However, in a particular embodiment, the process for making a foam comprises:
I) forming a melt polymer material comprising a blend such as described above;
II) incorporating into said melt polymer material, at an elevated pressure, one or more blowing agents to form a foamable gel;
III) cooling said foamable gel to an optimum temperature;
IV) extruding the foamable gel obtained from step III) through an extrusion die to a region of lower pressure, to form a foam.

The first step of the process that leads to the foam of the present invention comprises the mixture of the polystyrene resin, the different thermoplastic and, optionally one or more additives, and then the heating of the obtained blend at a temperature and pressure which allow the melting of the polymeric components. In a particular embodiment of the invention, the polystyrene resin and the different thermoplastic are introduced in an extruder and they are mixed and heated to a temperature at or above its glass transition temperature or melting point, in order to plasticized the polymeric components and to form an homogeneous melt polymer. Optionally, the additives are added in the extruder at the same time as the polymer components.

Regarding to step II), a blowing agent is incorporated into the melt polymer material at an elevated pressure. In the context of the present invention, it is understood by "elevated pressure" a pressure higher than atmospheric pressure, which is sufficient to prevent substantial expansion of the melt polymer material and to advantageously disperse the blowing agent homogeneously therein. In a particular embodiment, the blowing agent is incorporated into an extruder at a pressure comprised between 110 and 200 bars.

Blowing agents are those typically used in the production of extruded polystyrene, for example aliphatic hydrocarbons such as methane, ethane, propane, n-butane, isobutane, n-pentane, isopentane, hexane and heptane; alicyclic hydrocarbons such as cyclobutane, cyclopentane and cyclohexane; aliphatic alcohols such as methanol, ethanol, n-propanol, isopropanol and n-butanol; cetones such as acetona and methylethylcetone; water; fully and partially halogenated aliphatic hydrocarbons such as fluorocarbons, chlorocarbons and chlorofluorocarbons. Examples of fluorocarbons include methyl fluoride, perfluoromethane, ethyl fluoride, 1,1difluoroethane (HFC-152a), fluoroethane (HFC-161), 1,1,1-trifluoroethane (HFC143a), 1,1,1,2-tetrafluoroethane (HFC-134a), 1,1,2,2-tetrafluoroethane (HFC-134), 1,1,1,3,3-pentafluoropropane, pentafluoroethane (HFC-125), difluoromethane (HFC32), perfluoroethane, 2,2-difluoropropane,1, 1, 1-trifluoropropane, perfluoropropane, dichloropropane, difluoropropane, perfluorobutane, perfluorocyclobutane; other compunds such as dimethylether, methyl chloride; ethyl chloride; azodicarbonamide, azodiisobutyro-nitrile, barium azodicarboxylate, N,N'-dimethyl-N,N'dinitrosoterephthalamide, benzene sulfonhydrazide, 4,4-oxybenzene sulfonyl semicarbazide, *p*-toluene sulfonyl semicarbazide, trihydrazino triazine, mixtures of citric acid and sodium bicarbonate; inorganic gases such as carbon dioxide, nitrogen and air. Preferred blowing agents include carbon dioxide, ethanol, HFC-152a, HFC-134a, dimethylether and mixtures thereof. The amount of blowing agent incorporated into the polymer melt material to make a foam-forming polymer gel is from 2 to 8% by weight per 100% by weight of blend, preferably from 4 to 8% by weihgt.

Additionally, in order to diminish the viscosity of the blend, a solvent such as for example ethanol, propanol or dimethylether can be added.

Prior to extruding the formable gel through the die, said foamable gel is gradually cooled to an optimum temperature in order to optimize physical characteristics of the final foam structure. This optimum temperature, as defined in step III), is typically above each component's polymer glass transition temperature (Tg), or for those having sufficient crystallinity, near the peak crystalline melting temperature (Tₘ). "Near" means at, above, or below and largely depends upon where stable foamable gel exists. The temperature desirably falls within 30°C above or below the Tₘ. The gel may be cooled in the extruder or other mixing device or in separate coolers.

In a particular embodiment, the foamable gel is gradually cooled in the extruder from about 200°C to about 125°C. The time of residence of the components in the extruder has to be the minimum in order to avoid flame retardant degradation and this also allows increasing the temperature favouring the melting of all the components. In a preferred embodiment, the time of residence of the components in the extruder is comprised between 12 and 30 min.

In the last step, the foamable gel is then extruded or conveyed through a die of desired shape to a zone of reduced or lower pressure to form the foam structure. The zone of lower pressure is at a pressure lower than that in which the foamable gel is maintained prior to extrusion through the die. The lower pressure is optionally superatmospheric or subatmospheric (vacuum), but in a preferred embodiment this pressure is at an atmospheric level.

Foams of the present invention have properties comparable to foams made only by extruded polystyrene or by mixtures of polystyrene and recycled polystyrene, such as low density, a high closed cells percentage, good compression strength, dimensional stability and good surface quality which make them suitable as thermal insulators. The foam density is comprised between 10 and 50 kg/m³, preferably between 20 and 40, more preferably between 32 and 37 kg/m³. Also, the foams present a percentage of closed cells higher than 80%, more preferably higher than 85%, and more preferably higher than 90%.

Foams of the present invention may take any known physical configuration, such as sheet, round, rod, solid plank, laminated plank, profiles and bun stock. The foams may be converted into fabricated articles using any conventional process or method.

In a preferred embodiment, foam of the present invention is obtained in the shape of a board.

Accordingly, another aspect of the present invention relates to a foamed extrusion board obtainable from a foam as described above.

In a first stage, foamed extrusion boards are obtained at the same time as the foam described above is obtained from the extruder in the step IV) of the process mentioned above, by positioning a die with the desired measures and simultaneously controlling the extrusion speed.

Once the foamed extrusion board has protruded from the extruder it is cut to the desired measure and then it is left at room temperature in a bucket chain with the aim of allowing the curing of the material and in order to optimized the width of the foamed board. Finally, the foamed boards are subjected to another cutting step if lateral edges are necessary for the subsequent assembly.

In a particular embodiment, the die has a measure such that it enables to prepare a foamed extrusion board with a thickness comprised preferably between 20 and 200 mm, more preferably between 30 and 120 mm.

Foamed extrusion boards of the present invention also present a good dimensional stability according to norm UNE-EN 1604 which means that after several days, particularly after 42 days since its production and being subjected to a heating at an elevated temperature, particularly at 70°C during 2 days, the foams have not suffer a diminish on each lineal dimension lower than 5% with respect to the original dimension. In addition of that, boards show a good quality surface which means that boards do not show holes or hatchings due to the presence of non-blowing particles.

Foams of the present invention may be used in any application where foams of polystyrene of comparable thermal capability and closed cell content are used today. Accordingly, another aspect of the invention relates to the use of a foam as described above as thermal insulator in different fields, such as building, construction, automotive, buoyancy and refrigeration. These applications include, without limit, wall sheating, roofing, foundation insulation, residing underlayment, pipe insulation, lorry and convoy insulation, floating docks and rafts insulation, elaboration of structural composite boards, elaboration of doors and fabrication of refrigerators.

Finally, another aspect of the invention refers to the use of a foamed extrusion board as describe above as thermal insulator in different fields, such as building, construction, automotive, buoyancy and refrigeration. These applications include, without limit, wall sheating, roofing, foundation insulation, residing underlayment, pipe insulation, lorry and convoy insulation, floating docks and rafts insulation, elaboration of structural composite boards, elaboration of doors and fabrication of refrigerators.

The, foregoing list merely illustrates a number of suitable applications. Skilled artisans can readily envision additional applications without departing from the scope of spirit of the present invention.

### Examples

### Example 1

Different compositions comprising polystyrene resin or polystyrene resin and a different thermoplastic coming from virgin or recycled polymers were prepared according to the following procedures.

### Composition 1

For the preparation of the composition 1, a blend containing a 94% wt of conventional virgin polystyrene resin with melt flow index of 6,5, 1% wt of talc as nucleating agent and 5% wt of hexabromocyclododecane as flame retardant, is introduced into an extruder and plasticized at temperature of 200°C and at pressure of 200 bars.

### Compositions 2 and 3

Blend are prepared according to the procedure described for the composition 1, except that instead of 94% wt. of conventional virgin polystyrene, it is used a mixture of the conventional polystyrene and recycled polystyrene in the proportions 84% PS/10% PS rec (composition 2) and 64% PS/30% PS rec (composition 3).
The recycled polystyrene used has a melt index of 6.5 g/10 min.

### Compositions 4 and 5

Blends are prepared according to the procedure described for the compositions 2 and 3 but instead of recycled polystyrene it is used virgin polypropylene in the following proportions: 84% PS/10% PP (composition 4) and 74% PS/20% PP (composition 5).
The virgin polypropylenes used are conventional polypropylene homopolymers having melt indexes of 1.8 g/10 min, 3 g/10 min and 6 g/10 min as well as random polypropylene copolymers having a melt index of 1.7 g/10 min.

### Compositions 6 and 7

Blends are prepared according to the procedure described for the compositions 4 and 5 but instead of virgin polypropylene it is used recycled polypropylene in the same proportions 84% PS/10% PP rec (composition 6) and 74% PS/20% PP rec (composition 7). The recycled polypropylene used has a melt index of 4 g/10 min.

### Composition 8

A blend is prepared according to the procedure described for the compositions 6 but instead of recycled polypropylene it is used recycled polyethylene terephthalate (PET) in a proportion of 84% PS/10% PET.
Due to the fact that PET is moisture sensitive it is necessary to dry it at 175°C before the introduction in the extruder, thus avoiding a fall in the intrinsic viscosity during the plasticization step.

### Composition 9

A blend is prepared according to the procedure described for the composition 8 but instead of PET it is used high density polyethylene (LDPE) in the same proportion 84% PS/10% LDPE.

### Compositions 10 and 11

Blends are 'prepared according to any of the procedures described above but as a thermoplastic it is used recycled polyethylenes in different proportions: 89% PS/5% PEs rec (composition 10) and 84% PS/10% PEs rec (composition 11).

Once the different blends are plasticized, 4 parts by weight of CO₂ for each 100 parts by weight of the polymeric blend are injected at 150 bars as a blowing agent in order to form a foamable gel. Additionally, 2 parts by weight of ethanol for each 100 parts by weight of the polymeric blend are also added in order to diminish gel's viscosity, being the gel flow 750 kg/h.

Subsequently, the foamable gel is subjected to a gradually cooling by decreasing the temperature from 200°C to 125°C and to a gradually decompression by decreasing the pressure from 200 to 40 bars and, afterwards, it is extruded through an extrusion die in order to obtained a foamed extrusion board with a thickness of 1.5 mm.

Once the foamed boards are prepared, properties such as compression strength, surface quality, dimensional stability, density and closed cells percentage have been measured in order to compare the quality of the blends of the present invention with respect to those made only of polystyrene (virgin or a mixture of virgin polystyrene and recycled polystyrene).

The density was determined measuring the weight and the volume of the final product, the closed cell percentage with Micromeritis apparatus and the compression strength with a universal assay machine Instron.

Table I shows the results obtained in the measurement of the mentioned properties for each composition.

**Tabla I**

| composition | blend | compression strength | surface quality | dimensional stability | density (kg/m³) | closed cells (%) |
|---|---|---|---|---|---|---|
| 1 | 94% PS | Good | Very good | Very good | 33.2 | 97 |
| 2 | 84%PS / 10% PS rec | Very good | Very good | Very good | 33.5 | 95 |
| 3 | 64%PS / 30% PS rec | Very good | Very good | Very good | 34.1 | 94 |
| 4 | 84%PS / 10% pp | Good | Good | Very good | 35.5 | 91 |
| 5 | 74%PS/ 20% PP | Good | Acceptable | Good | 36.6 | 87 |
| 6 | 84%PS / 10% PP rec | Good | Acceptable | Very good | 34.9 | 89 |
| 7 | 74%PS/ 20% PP rec | Good | Acceptable | Good | 35.9 | 85 |
| 8 | 84%PS / 10% PET rec | Good | Acceptable | Very good | 36.5 | 82 |
| 9 | 84%PS / 10% HDPE es LDPE | Good | Good | Good | 32.7 | 87 |
| 10 | 89%PS / 5% PE's rec | Good | Good | Very good | 32.9 | 91 |
| 11 | 84%PS / 10% PE's rec | Good | Good | Good | 33.2 | 89 |

A good dimensional stability means that after 42 days since its production and being subjected to a heating at 70°C during 2 days, the boards have not suffer a diminish on each lineal dimension lower than 5% with respect to the original dimension.

A good quality surface means that boards do not show holes or hatchings due to the presence of non-blowing particles.

A good compression strength means that after 30 days, the compression strength at 10% is higher than 300 Kpa.

These results pointed out that blends comprising polystyrene resin and different thermoplastics such as polypropylene, polyethylene and derivatives, and polyethylene terephthalate coming form virgin or recycled polymers, render foamed materials having similar properties to those made only with polystyrene.

## Claims

1. A blend which comprises:
- at least 70% by weight of a thermoplastic which is a polystyrene resin; and
- from 0.5% to 30% by weight of a different thermoplastic

2. A blend according to claim 1 wherein the proportion of the different thermoplastic is comprised between 2% and 20% by weight, more preferably between 5% and 15% by weight.

3. A blend according to claims 1 and 2 wherein the polystyrene resin is virgin, recycled or a mixture of virgin and recycled polystyrene resin.

4. A blend according to claims 1 and 2 wherein the different thermoplastic is virgin, recycled or a mixture of virgin and recycled thermoplastic.

5. A blend according to claims 1 to 4 wherein the polystyrene resin is a homopolymer of styrene, methyl styrene, ethyl styrene, isopropyl styrene, dimethyl styrene, chlorostyrene, bromostyrene, vinyltoluene, a copolymer of styrene and alpha-methyl styrene, acrylonitrile, butadiene or methyl methacrylate, or mixtures thereof.

6. A blend according to any of claims 1 to 5 wherein the polystyrene resin is a mixture of virgin polystyrene resin and recycled polystyrene resin, being the proportion of recycled polystyrene resin comprised between 2 and 75% with respect to the total weight of the polystyrene resin in the blend, more preferably between 5 and 50%, even more preferably between 5 and 20%.

7. A blend according to any of claims 1 to 6 wherein the polystyrene resin has a melt index comprised between 0.5-30 g/10 min, preferably between 2 and 20 g/10 min, more preferably between 2 and 10 g/10 min.

8. A blend according to claims 1 to 7 wherein the different thermoplastic is selected from polypropylene (PP), polyethylene (PE), high density polyethylene (HDPE), low density polyethylene (LDPE), polyethylene terephthalate (PET), polyvinyl chloride (PVC), copolymers of ethylene and propylene and mixtures thereof.

9. A blend according to claim 8 wherein the different thermoplastic is a homopolymer of: ethylene, propylene, ethylene terephtalate, vinyl chloride; a copolymer of ethylene and propylene; or mixtures thereof, more preferably the different thermoplastic is a homopolymer of ethylene or propylene.

10. A blend according to claims 1 to 9 wherein the different thermoplastic is a mixture of virgin thermoplastic and recycled thermoplastic, being the proportion of recycled thermoplastic in the mixture comprised between 2 and 75% with respect to the total weight of the thermoplastic in the blend, more preferably between 5 and 50%, even more preferably between 5 and 20%.

11. A blend according to claims 1 to 10 which further comprises one or more additives selected from dyes, stability control agents, nucleating agents, inorganic fillers, plasticizers, conductive fillers, pigments, colorants, antioxidants, acid scavengers, ultraviolet absorbers or stabilizers, flame retardant agents, processing aids, anti-static agents, cling additives and antiblock additives.

12. A process for preparing a blend according to claims 1 to 11 which comprises mixing physically the polystyrene resin, the different thermoplastic and, optionally the additives, in the desired proportions in a mixing apparatus such as a screw extruder or a Banbury mixer, at a temperature and pressure which allow the melting of the polymeric components.

13. A process according to claim 12 wherein the temperature is comprised between 125°C and 200°C, and the pressure is comprised between 40 and 200 bars.

14. A foam obtainable from a blend according to claims 1 to 11.

15. A process for making a foam which comprises:
I) forming a melt polymer material comprising a blend according to claims 1 to 11; and
II) incorporating into said melt polymer material, at an elevated pressure, one or more blowing agents to form a foamable gel;
III) cooling said foamable gel to an optimum temperature;
IV) extruding the foamable gel obtained in step III) through an extrusion die to a region of lower pressure, to form a foam.

16. A process according to claims 15 wherein the blowing agent is selected from aliphatic hydrocarbons such as methane, ethane, propane, n-butane, isobutane, n-pentane, isopentane, hexane and heptane; alicyclic hydrocarbons such as cyclobutane, cyclopentane and cyclohexane; aliphatic alcohols such as methanol, ethanol, n-propanol, isopropanol and n-butanol; cetones such as acetona and methylethylcetone; water; fully and partially halogenated aliphatic hydrocarbons such as fluorocarbons, chlorocarbons and chlorofluorocarbons; dimethylether; methyl chloride; ethyl chloride; azodicarbonamide, azodiisobutyro-nitrile, barium azodicarboxylate, N, N'-dimethyl-N, N'dinitrosoterephthalamide, benzene sulfonhydrazide, 4,4-oxybenzene sulfonyl semicarbazide, p-toluene sulfonyl semicarbazide, trihydrazino triazine, mixtures of citric acid and sodium bicarbonate; inorganic gases such as carbon dioxide, nitrogen, air and mixtures thereof.

17. A process according to claim 16 wherein the blowing agent is carbon dioxide, a fluorocarbon selected from 1,1,1,2-tetrafluoroethane and 1,1-difluoroethane, or mixtures thereof, and wherein said blowing agent is present in a proportion between 2 and 8% by weight respect to the total weight of the blend.

18. A foam obtainable according to any of the processes defined in claims 15 to 17.

19. A foam according to claims 14 or 18 which has a density comprised between 10 and 50 kg/m³, preferably between 20 and 40 kg/m³, more preferably between 32 and 37 kg/m³.

20. A foam according to claims 14 or 18 which has a closed cell percentage higher than 80%, preferably higher than 85%, and more preferably higher than 90%.

21. A process according to claim 15 wherein in step IV) the foam is obtained in the shape of a board.

22. A foamed extrusion board obtainable from a foam according to any of claims 14 and 18 to 20.

23. A foamed extrusion board obtainable according to the process defined in claim 21 having a thickness comprised between 20 and 200 mm.

24. Use of a blend according to any of claims 1 to I 1 in the elaboration of a foam.

25. Use of a foam according to any of claims 14 and 18 to 20 in the elaboration of a foamed extrusion board.

26. Use of a foam according to any of claims 14 and 18 to 20 as a thermal insulator in the building, construction, automotive, buoyancy and refrigeration field.

27. Use of a foam according to claim 26 for wall sheating, roofing, foundation insulation, residing underlayment, pipe insulation, lorry and convoy insulation, floating docks and rafts insulation, elaboration of structural composite boards, elaboration of doors and fabrication of refrigerators.

28. Use of a foamed extrusion board according to claims 22 and 23 as a thermal insulator in the building, construction, automotive and buoyancy field.

29. Use of a foamed extrusion board according to claim 28 for wall sheating, roofing, foundation insulation, residing underlayment, pipe insulation, lorry and convoy insulation, floating docks and rafts insulation, elaboration of structural composite boards, elaboration of doors and fabrication of refrigerators.
